# EUROPEAN PATENT APPLICATION

(11) **EP 4 276 981 A1**
(43) Date of publication of application: **15.11.2023**
(21) Application number: 22860334.6
(22) Date of filing: 17.08.2022
(51) Int. Cl.: H01M 10/615, H01M 10/6554, H01M 10/6571

(54) **BATTERY AND ELECTRICAL DEVICE**

(30) Priority: 27.08.2021 CN 202122052576 U
(71) Applicant: Contemporary Amperex Technology Co., Limited, Ningde, Fujian 352100 (CN)
(72) Inventor: CHEN, Xubin, Ningde, Fujian 352100 (CN)
(74) Representative: Gong, Jinping
(86) International application number: PCT/CN2022/112908
(87) International publication number: WO 2023/024988

(57) **Abstract**

The present application relates to the field of new energy technology, and discloses a battery and an electrical apparatus. The battery comprises: a battery cell; a heating component attached to the surface of at least one side of the battery cell, and the heating component is used to heat the battery cell; wherein, an exhaust structure is provided on the heating component at a position opposite to the surface of at least one side of the battery cell, and the exhaust structure is used to discharge the gas between the surface of at least one side of the battery cell and the heating component. In this way, the present application can make the heating component closely adhere to the surface of the battery cell, thereby improving the heat transfer efficiency.

## Description

### Cross-Reference to Related Applications

The present application claims priority to Chinese patent application 202122052576.0 filed on August 27, 2021 and entitled "BATTERY AND ELECTRICAL APPARATUS", the entire contents of which are incorporated herein by reference.

### Technical Field

The present application relates to the technical field of new energy, and in particular, to a battery and an electrical apparatus.

### Background Art

Heating the battery during the charge and discharge process can effectively improve the charge and discharge capacity of the battery, improve the cycling performance and prolong the service life. Especially in extremely cold conditions, the charge and discharge capacity of the battery itself will be reduced by the impact of the low temperature environment, and effective heating of the battery can reduce this impact.

### Summary of the Invention

In view of the above problems, the embodiments of the present application provide a battery and an electrical apparatus to enable close adhering of the heating component to the surface of the battery cell.

According to an aspect of an embodiment of the present application, there is provided a battery, comprising: a battery cell; a heating component attached to the surface of at least one side of the battery cell, and the heating component is used to heat the battery cell; wherein, an exhaust structure is provided on the heating component at a position opposite to the side surface of the battery cell, and the exhaust structure is used to discharge the gas between the side surface of the battery cell and the heating component.

In the battery provided in an embodiment of the present application, an exhaust structure is provided on the heating component at a position opposite to the surface of at least one side of the battery cell, so that the gas between the side surface of the battery cell and the heating component can be exhausted though the exhaust structure smoothly, and the surface of the battery cell and the heating component can be completely adhered, which can effectively avoid the phenomenon of partial dry heating of the heating component, improve the heat transfer efficiency, and the battery can quickly reach the required working temperature, thereby improving the cycling performance and service life of the battery.

In an optional manner, the exhaust structure is arranged on the side surface of the battery cell in the middle area along the width direction of the battery cell.

By adopting the above solution, it is possible to avoid the phenomenon that the edge of the heating component is adhered to the side surface of the battery cell while the middle area of the heating component cannot be adhered due to the existence of the gas. The exhaust structure arranged in the middle area can discharge the gas at this position smoothly to improve the attachment effect of the heating component to the side of the battery cell, thereby improving the heating effect.

In an optional manner, the exhaust structure comprises an exhaust vent extending through the heating component. By adopting the above solution, the exhaust vent can be used to discharge the gas between the heating component and the surface of the battery cell without affecting the overall effect of the heating component, so that the heating component and the surface of the battery cell are completely adhered, thereby improving the heating effect.

In an optional manner, there are a plurality of exhaust vents arranged at intervals along the height direction of the battery cell.

By adopting the above solution, a plurality of exhaust vents are arranged at intervals along the height direction of the battery cell, so that the exhaust vents can be evenly distributed on the area of the heating component corresponding to the side surface of the battery cell, which can enables the heating component to heat the side surface of the battery cell more uniformly, and also makes it easy for the gas located in all positions in the middle area on one side of the battery cell to reach the exhaust vent to discharge.

In an optional manner, the heating component is further provided with an anti-tear structure arranged at the end portion of the heating component along the height direction, and the anti-tear structure and the exhaust structure are arranged along the height direction at intervals.

By adopting the above solution, the anti-tear structure can stop the tearing in time when the exhaust structure is torn along the height direction, so as to avoid damage to the heating component and affecting the heating function of the battery.

In an optional manner, the anti-tear structure comprises an arc portion extending through the heating component.

By adopting the above solution, both ends of the exhaust structure extend towards the middle part of the arc portion, and in case that the tear of the exhaust structure spreads, tearing stops when the crack spreads to the middle part of the arc portion, which can effectively avoid the breakage of the whole heating component, thereby increasing the service life of the heating component.

In an optional manner, the width of the exhaust structure is 2-6 mm along the width direction of the battery cell.

By adopting the above solution, it is avoided that the setting of the exhaust structure affects the heating effect of the heating component, and it is also avoided that the exhaust structure is easily torn during the exhaust process due to too small width.

In an optional manner, the distance from the exhaust structure to the edge of the heating component along the height direction of the battery cell is 4-6 mm.

By adopting the above solution, the distance from the exhaust structure to the edge of the heating component along the height direction of the battery cell is set at 4-6 mm, which can effectively avoid the susceptibility of the heating component to breakage or tearing due to too close distance from the exhaust structure to the edge of the heating component, while ensuring that the distance between the exhaust structure and the middle area where the battery cell is adhered to the heating component is relatively small, so that the gas in this area can be smoothly discharged through the exhaust structure.

In an optional manner, the heating component is further provided with a heating wire, and the heating wire is arranged on the outer periphery of the exhaust structure.

By adopting the above solution, arranging the heating wire on the outer periphery of the exhaust structure can avoid electric leakage caused by exposure of the heating wire in the exhaust structure and can also prevent the heating wire from covering the exhaust structure.

In an optional manner, the battery comprises a plurality of battery cells stacked along the width direction of the battery cell, the heating component comprises a plurality of exhaust structures, and each exhaust structure is correspondingly attached to the side surface of each battery cell.

By adopting the above solution, one heating component comprises a plurality of exhaust structures, and when assembling, the heating component can be directly attached to the integral whole composed of a plurality of battery cells, so as to improve the efficiency of arranging a plurality of exhaust gas structures on the heating component. Also, a plurality of exhaust structures are correspondingly attached to the surface of one side of a plurality of battery cells, so that each battery cell can be completely adhered to the heating component, which, by improving the heating efficiency for each battery cell, improves the cycling performance and service life of each battery cell, thereby improving the overall performance of the battery.

According to another aspect of embodiments of the present application, provided is an electrical apparatus comprising the above-mentioned battery.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### Description of Drawings

Various other advantages and benefits will become apparent to those of ordinary skill in the art upon reading the following detailed description of the preferred embodiments. The drawings are for the purpose of illustrating the preferred embodiments only and are not to be considered as a limitation to the present application. Also, the same components are denoted by the same reference numerals throughout the drawings. In the drawings:
Fig. 1 is a schematic structural view of a vehicle according to some embodiments of the present application;
Fig. 2 is a schematic exploded view of a battery according to some embodiments of the present application;
Fig. 3 is a schematic exploded view of a battery cell in a battery according to some embodiments of the present application
Fig. 4 is an assembly schematic view of a plurality of battery cells and a heating component provided by some embodiments of the present application;
Fig. 5 is a schematic structural view of a heating component provided by some embodiments of the present application;
Fig. 6 is a schematic structural view of an exhaust structure and an anti-tear structure provided by some embodiments of the present application;
Fig. 7 is a partial enlarged view of K in Fig. 5;
Fig. 8 is a perspective view of a heating component provided by some embodiments of the present application;

### Description of reference numerals:

Vehicle 1000;
Battery 100, controller 200, motor 300;
Box body 10, first part 11, second part 12;
Battery cell 20, end cover 21, electrode terminal 21a, case 22, electrode assembly 23, and tab 23 a;
Heating component 400, exhaust structure 410, anti-tear structure 430, heating wire 450;

The width direction X of the battery cell, the height direction Y of the battery cell, and the length direction Z of the battery cell.

### Detailed Description

Examples of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "comprising" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that three relationships may exist. For example, A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

At present, from the perspective of the development of the market situation, power batteries are more and more widely used. The power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

In order to achieve the normal operation and use of the battery in a low temperature environment, the existing battery is usually provided with a heating component such as a heating film attached on the side of the battery cell to realize the heating function of the battery.

The inventors of the present application noticed that during the process of attaching the heating component to the side of the battery cell, the heating component is prone to partial dry heating, resulting in uneven heating of the battery cell and other poor heating effects, thus affecting the cycling performance and service life of the battery cell. This is particularly serious under extreme environmental conditions such as extreme cold conditions, which may even cause the entire battery to stop working directly.

After further research by the inventors, it was found that the reason for partial dry heating of the heating component is that the surface of the battery cell is often not smooth enough, and has local recesses. As a result, it easily occurs that when the heating component is attached to the side surface of the battery cell, the edge of the recess is firstly adhered to the heating component, so that the gas in the recess is captured between the heating component and the side surface of the battery cell and is not easily discharged, and the heating component can only heat the battery cell through the gas, resulting in low heating efficiency. Moreover, as the heating temperature rises, the gas is prone to volume expansion or migration, which further affects the attaching effect of the heating component to the side surface of the battery cell, thereby affecting the heating effect of the heating component. As such, the cycling performance and service life of the battery cells are likely to be affected, resulting in a decrease in the performance of the battery as a whole.

Based on the above considerations, the inventors of the present application provide a battery, which comprises a heating component provided with an exhaust structure. The heating component is attached to the surface of at least one side of the battery cell, and the exhaust structure is used to discharge the gas between the side surface of the battery cell and the heating component, so that the heating component and the battery cell can be completely adhered when attached, avoiding dry heating of the heating component, thereby improving the heating effect of the heating component on the battery cell, so as to improve the cycling performance and service life of battery cells, thereby improving the overall performance of the battery.

The battery disclosed in the embodiments of the present application can be used, but not limited to, in electrical apparatuses such as a vehicle, a ship, or an aircraft. The battery cells and batteries disclosed in the present application may be used to form the power supply system for the electrical apparatus, which is conducive to improving the battery performance and the service life of the battery.

Embodiments of the present application provide an electrical apparatus that uses a battery as a power supply, and the electrical apparatus may be, but is not limited to, a mobile phone, a tablet, a laptop, an electric toy, an electric tool, a battery vehicle, an electric vehicle, a ship, a spacecraft, and so on. Among them, electric toys can include stationary or mobile electric toys, such as a gaming machine, an electric car toy, an electric boat toy, an electric airplane toy, and the like, and spacecrafts can include an airplane, a rocket, an aerospace plane, a spaceship, and the like.

For the convenience of description, the following embodiments are illustrated as an example, in which an electrical apparatus according to an embodiment of the present application is a vehicle 1000.

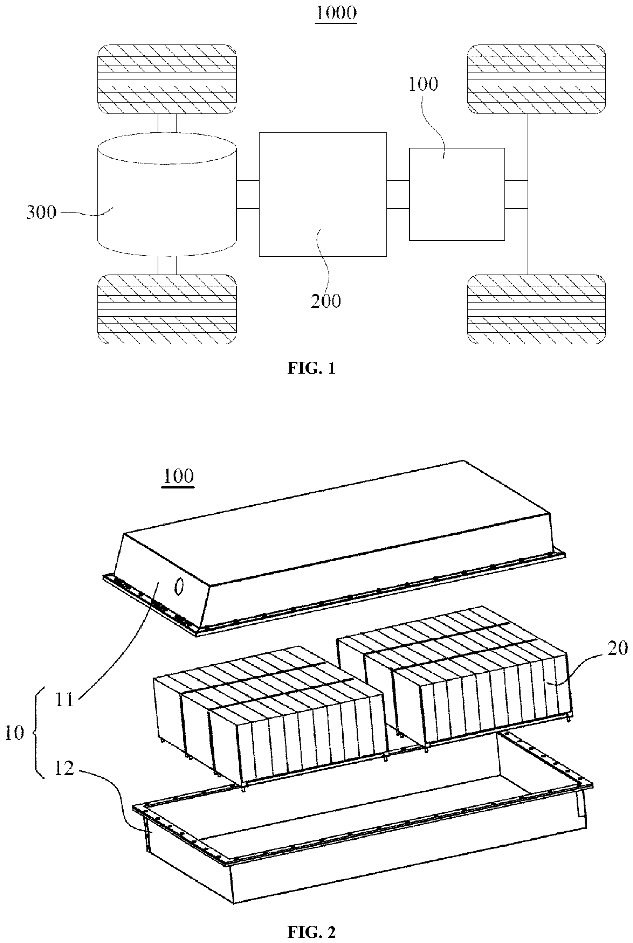

Referring to Fig. 1, it is a schematic structural view of a vehicle 1000 provided by some embodiments of the present application. The vehicle 1000 may be a fuel vehicle, a gas vehicle, or a new energy vehicle, and the new energy vehicle may be an all-electric vehicle, a hybrid vehicle, an extended range electric vehicle, or the like. The interior of the vehicle 1000 is provided with a battery 100, and the battery 100 may be provided at the bottom or head or tail of the vehicle 1000. The battery 100 may be used to power the vehicle 1000. For example, the battery 100 may be used as an operating power source of the vehicle 1000. The vehicle 1000 may further comprise a controller 200 and a motor 300, wherein the controller 200 is used to control the battery 100 to power the motor 300, for example, for the operating power demand when the vehicle 1000 is starting, navigating and driving.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to Fig. 2, it is a schematic exploded view of a battery 100 provided by some embodiments of the present application. The battery 100 comprises a box body 10 and a battery cell 20, and the battery cell 20 is accommodated within the box body 10. Wherein, the box body 10 is used to provide an accommodating space for the battery cell 20, and the box body 10 can be of various structures. In some embodiments, the box body 10 may comprise a first part 11 and a second part 12. The first part 11 and the second part 12 are covered by each other, and the first part 11 and the second part 12 together define an accommodating space for accommodating the battery cell 20. The second part 12 may be a hollow structure with one end open, the first part 11 may be a plate-like structure, and the first part 11 covers the opening side of the second part 12, so that the first part 11 and the second part 12 together define the accommodating space. It is also possible that each of the first part 11 and the second part 12 is a hollow structure with one side open, and the opening side of the first part 11 covers the opening side of the second part 12. Of course, the box body 10 formed by the first part 11 and the second part 12 can be of various shapes, such as a cylinder or a cuboid.

In the battery 100, there may be a plurality of battery cells 20, and the plurality of battery cells 20 can be connected in series or parallel or in a mixed connection, wherein the mixed connection means that the plurality of battery cells 20 are connected in both series and parallel. The plurality of battery cells 20 may be directly connected in series or in parallel or in a combination thereof, and then an integral whole composed of the plurality of battery cells 20 is accommodated in the box body 10; of course, the battery 100 may be in a form as follows: a plurality of battery cells 20 are connected in series or in parallel or in a combination thereof to form a battery module, and a plurality of battery modules are then connected in series or in parallel or in a combination thereof to form an integral whole which is accommodated in the box body 10. The battery 100 may further comprise other structures, for example, the battery 100 may further comprise a converging portion for electrically connecting the plurality of battery cells 20.

Each battery cell 20 may be a secondary battery or a primary battery; or may be a lithium-sulfur battery, a sodium-ion battery or a magnesium-ion battery, but is not limited thereto. The battery cell 20 may be in the shape of a cylinder, a flat body, a cuboid or others.

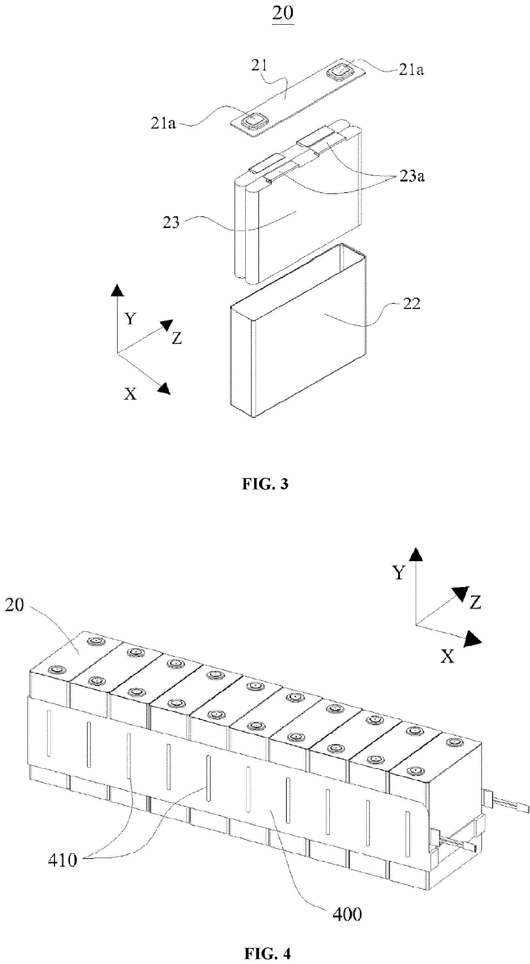

Referring to Fig. 3, it is a schematic exploded view of a battery cell 20 provided by some embodiments of the present application. The battery cell 20 is the smallest unit for forming the battery 100. As shown in Fig. 3, the battery cell 20 comprises an end cover 21, a case 22, an electrode assembly 23 and other functional components. To facilitate illustration, as shown in Fig. 3, the X direction is the width direction of the battery cell 20, the Y direction is the height direction of the battery cell 20, and the Z direction is the length direction of the battery cell 20.

The end cover 21 is a component that covers the opening of the case 22 to isolate the internal environment of the battery cell 20 from the external environment. Without limitation, the shape of the end cover 21 can be adapted to the shape of the case 22 to fit the case 22. Optionally, the end cover 21 can be made of a material (such as aluminum alloy) with a certain hardness and strength, so that the end cover 21 is not easily deformed when being squeezed and collided, so that the battery cell 20 can have a higher structural strength and improved safety performance. Functional components such as an electrode terminal 21a may be provided on the end cover 21. The electrode terminal 21a can be used to be electrically connected with the electrode assembly 23 for outputting or inputting electric energy of the battery cell 20. In some embodiments, the end cover 21 may be further provided with a pressure relief mechanism which is configured to relieve internal pressure when the internal pressure or temperature of the battery cell 20 reaches a threshold. The end cover 21 may be made of various materials, such as copper, iron, aluminum, stainless steel, aluminum alloy, and plastic, which is not particularly limited in the embodiments of the present application. In some embodiments, an insulator can be provided inside the end cover 21, and the insulator can be used to isolate the electrically connected components in the case 22 from the end cover 21 to reduce the risk of short circuit. Exemplarily, the insulator may be plastic, rubber or the like.

The case 22 is a component used to fit with the end cover 21 to form the internal environment of the battery cell 20, wherein the resulting internal environment can be used to accommodate the electrode assembly 23, the electrolyte solution and other components. The case 22 and the end cover 21 can be independent components, an opening can be provided on the case 22, and the internal environment of the battery cell 20 can be formed by making the end cover 21 cover the opening. Without limitation, the end cover 21 and the case 22 can also be integrated. Specifically, the end cover 21 and the case 22 can form a common connection surface before other components are inserted into the case, and when the inside of the case 22 needs to be sealed, the end cover 21 is then allowed to cover the case 22. The case 22 can be in various shapes and sizes, such as cuboid, cylinder, hexagonal prism and so on. Specifically, the shape of the case 22 may be determined according to the specific shape and size of the electrode assembly 23. The case 22 may be made of various materials, such as copper, iron, aluminum, stainless steel, aluminum alloy, and plastic, which is not particularly limited in the embodiments of the present application.

The electrode assembly 23 is a component in which the battery cell 20 is soaked in the electrolyte solution to undergo an electrochemical reaction. One or more electrode assemblies 23 may be contained in the case 22. The electrode assembly 23 is mainly formed by winding or stacking positive electrode sheets and negative electrode sheets, and a separator is usually provided between the positive electrode sheet and the negative electrode sheet. The parts of the positive electrode sheet and the negative electrode sheet with the active material constitute the main body of the electrode assembly 23, and the parts of the positive electrode sheet and the negative electrode sheet without the active material respectively constitute tabs 23a. The positive tab and the negative tab can be located at one end of the main body together or at two ends of the main body respectively. During the charging and discharging process of the battery cell, the positive electrode active material and the negative electrode active material react with the electrolyte solution, and the tabs 23a are connected to the electrode terminals to form a current loop.

According to some embodiments of the present application, reference is made to Fig. 3 and further to Fig. 4, which is an assembly schematic view of a plurality of battery cells 20 and a heating component 400 provided by some embodiments of the present application.

As shown in Fig. 3 and Fig. 4, the present application provides a battery 100. The battery 100 comprises a battery cell 20 and a heating component 400. The heating component 400 is attached to the surface of at least one side of the battery cell 20 to heat the battery cell 20. An exhaust structure 410 is provided on the heating component 400 at a position opposite to the side surface of the battery cell 20, and the exhaust structure 410 is used to discharge the gas between the side surface of the battery cell 20 and the heating component 400.

The heating component 400 is a component for providing heat to the battery cell 20, and the heating component 400 can be used to convert electrical energy into thermal energy and provide thermal energy to the battery cell 20. The type of the heating component 400 can be a variable resistance heating component, a constant resistance heating component, etc. The former is usually called PTC (positive temperature coefficient), and the latter is a heating film usually composed of a metal heating wire, such as a silicone heating film, and a flexible electric heating film. The heating component 400 can be bonded by an adhesive, or by applying a pressing pressure to the heating component 400 for a certain period of time, so that the surface of the heating component 400 can be adhered to the surface of the battery cell 20. The heating component 400 can be adhered to the surface of one side or both sides of the battery cell 20 in the width direction X, so that when a plurality of battery cells 20 are stacked along the width direction X, an integral heating component 400 can be simultaneously attached to the same side surface of the plurality of battery cells 20, which improves the assembly efficiency of the heating component 400 and the battery cells 20. The heating component 400 can also be adhered to the surface of one side or both sides of the battery cell 20 along other directions, and the heating component 400 can be integral, or multiple and of separated type.

In the embodiment of the present application, an exhaust structure 410 is provided on the heating component 400 at a position opposite to a side surface of the battery cell 20. Through the exhaust structure 410, the gas between the heating component 400 and the side surface can be discharged, avoiding the phenomenon of dry heating as a result of the local presence of gas when the heating component 400 is attached to the surface of the battery cell 20, and further improving the heating effect of the heating component 400, so as to improve the cycling performance and service life of the battery cell 20 through the use environment of the battery cell 20.

According to some embodiments of the present application, optionally, with further reference to Fig. 4, the exhaust structure 410 is configured on a side surface of the battery cell 20 in the middle area along the width direction of the battery cell 20 (the X-axis direction in Fig. 3).

Since the side surface of the battery cell 20 may have a concave structure, the middle position of the concave structure is usually the position with the largest concavity, and it is also the position where the highest level of gas is likely to exist when the heating component 400 is attached to the surface. To increase the exhaust effect of the exhaust structure 410, the embodiment of the present application arranges the exhaust structure 410 on a side surface of the battery cell 20 in the middle area along the width direction X of the battery cell 20, so that more gas in the concave structure can be discharged rapidly. In addition, since the distance between other positions and the middle area in the concave structure is relatively short, the gas in other positions is easier to gather to the middle position. The exhaust structure 410 is arranged on a side surface of the battery cell 20 in the middle area along the width direction X of the battery cell 20, which contributes to making the gas in various positions in the concave structure move to the exhaust structure 410 arranged in the middle area to discharge.

Meanwhile, in the process of attaching the heating component 400 to the side surface of the battery cell 20, the gas between the heating component 400 and the battery cell 20 near the edge of the heating component 400 may be squeezed out from the outer edge of the heating component 400 during attachment. Since there is an assembly gap between adjacent battery cells 20, the gas near the assembly gap of adjacent battery cells 20 can be squeezed out from the assembly gap. However, the gas located in the middle area on the side of the battery cell 20 is difficult to discharge when the edges are adhered and sealed, so by arranging the exhaust structure 410 on the surface of at least one side of the battery cell 20 in the middle area along the width direction of the battery cell 20, the gas located in the middle area on the side of the battery cell 20 can be smoothly discharged through the exhaust structure 410, so as to improve the attachment effect of the heating component 400 and the side of the battery cell 20.

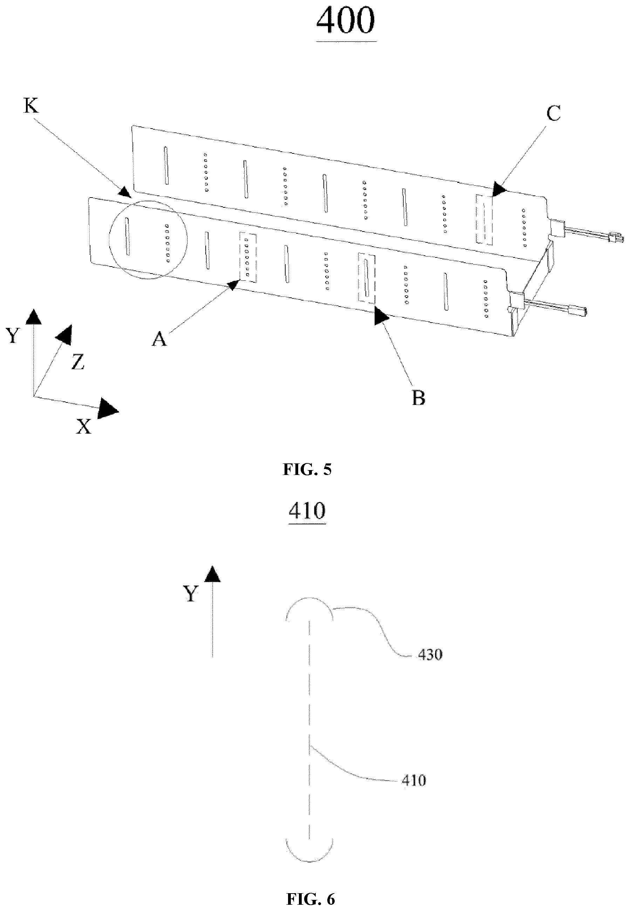

Referring to Fig. 5, it is a schematic structural view of a heating component 400 provided by some embodiments of the present application.

According to some embodiments of the present application, optionally, as shown in Fig. 5, the exhaust structure 410 may include an exhaust vent extending through the heating component 400.

The exhaust structure 410 comprises an exhaust vent. The exhaust vent is provided on the heating component 400 and may be communicated with the space on both sides of the heating component 400. The form of arrangement of the exhaust vent is not limited. Specifically, it can be single or multiple circular holes as shown in area A in Fig. 5, or strip-shaped holes as shown in area B in Fig. 5.

In some embodiments of the present application, as shown in Fig. 5, the exhaust vent is a through hole, and the diameter of the through hole can be 2-6 mm, and can also be other different sizes. Specifically, the diameter of the through hole needs to be selected considering the size of the battery cell 20 and the exhaust capacity required by the heating component 400. The larger the size of the battery cell 20, the higher the requirement for the exhaust capacity of the heating component 400, and it is necessary to select a through hole with a larger aperture, through which the gas between the heating component 400 and the side surface of the battery cell 20 can be discharged to the side of the heating component 400 away from the battery cell 20, so that the heating component 400 can be more closely adhered to the side surface of the battery cell 20, providing better heating effect.

In some embodiments of the present application, as shown in area C in Fig. 5, the exhaust vent may be a slit structure. The slit structure refers to a linear channel extending from one side of the heating component 400 towards the battery cell 20 to the other side. The slit structure may be arranged in the middle of the side surface of the battery cell 20, and the length of each slit is generally 4-8 mm. This structure enables smooth discharge of the gas, and allows the heating component 400 to undergo directional splitting rather than splitting along all directions in the actual process of adhering. Specifically, in the case that the surface of the battery cell 20 has a large concavity, when the heating component 400 is adhered to one side surface of the battery cell 20, the connection between adjacent slits can be broken and the slits are connected to increase the overall area of the exhaust structure 410, which can improve the exhaust effect. When different types of battery cells 20 lead to changes in exhaust requirements, the heating component 400 provided with a slit structure can be partially broken to adapt to battery cells 20 with different exhaust requirements, which is convenient to use and has a good exhaust effect.

In some embodiments of the present application, the plurality of exhaust structures 410 on the heating component 400 can also be configured as a through-hole structure and a slit structure respectively, which can be applied to the battery 100 with a plurality of battery cells 20 of different types, or can be applied to the battery 100 being provided with a plurality of battery cells 20 of the same type, for example, as shown in Fig. 5. The two can be arranged at intervals, which is not limited in the present application.

According to some embodiments of the present application, optionally, with further reference to Fig. 5, there are a plurality of exhaust vents, and the plurality of exhaust vents may be arranged at intervals along the height direction Y of the battery cell 20.

By arranging a plurality of exhaust vents at intervals along the height direction Y of the battery cell 20, the middle area between adjacent exhaust vents can be used to transfer heat to the battery cell 20, for example, for arrangement of heating wires, so as to avoid the poor heating effect on the battery cell 20 due to the too large area of the exhaust structure 410. In addition, the exhaust vents that can also be arranged at intervals can extend over the length of the whole exhaust structure 410 in the height direction Y of the battery cell 20. Each exhaust vent is used to discharge the gas in the adjacent area, so that the exhaust effect can be improved.

According to some embodiments of the present application, optionally, reference is made to Fig. 6. Fig. 6 is a schematic structural view of an exhaust structure 410 and an anti-tear structure 430 provided by some embodiments of the present application. The heating component 400 is also provided with an anti-tear structure 430. The anti-tear structure 430 is arranged at the end portion of the heating component 400 along the height direction Y, and the anti-tear structure 430 and the exhaust structure 410 are arranged at intervals along the height direction Y.

The anti-tear structure 430 is arranged on both ends of the exhaust structure such as a plurality of through holes and slit structures along the height direction Y (the slit structure is shown in Fig. 6 as an example). When the through hole structure or slit structure is torn along the height direction Y, the anti-tear structure 430 can prevent it from continuing to tear, thereby preventing the overall heating component 400 from breaking along the height direction Y and affecting the heating function of the heating component 400.

The anti-tear structure 430 can be set as a local structure with relatively high strength, such as by local thickening and local rubberizing, which can prevent further tearing of the exhaust structure 410.

According to some embodiments of the present application, optionally, with further reference to Fig. 6, the anti-tear structure 430 may include an arc portion extending through the heating component 400.

The arc portion can be a structure including arc features, such as arc slits, round holes, and the concave or convex part of the arc portion can be arranged at the end portion of the exhaust structure 410. when a tear occurs in the exhaust structure 410, as the tear spreads to the concave or convex part of the arc portion, the tear can be stopped instead of continuing to expand. In this way, the breakage of the overall heating component 400 can be effectively avoided.

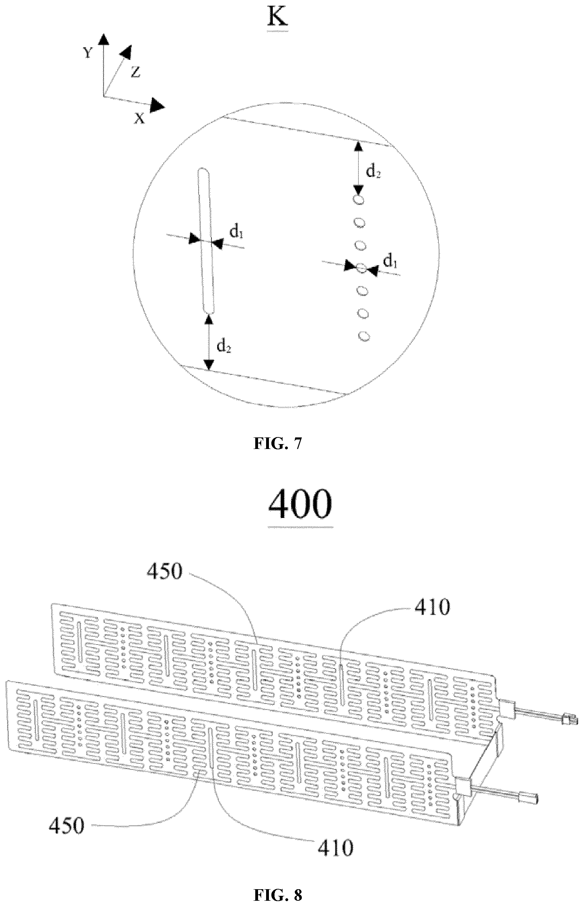

Referring to Fig. 7, it is a partial enlarged view of K in Fig. 5.

According to some embodiments of the present application, optionally, as shown in Fig. 7, along the width direction X of the battery cell 20, the width d1 of the exhaust structure 410 is 2-6 mm.

When the exhaust structure 410 is a circular through hole 410 shown in Fig. 7, the width d1 of the exhaust structure 410 refers to the diameter of the circular through hole; when the exhaust structure 410 is of other shapes, the width d1 of the exhaust structure 410 can also be 2-6 mm, so as to prevent the heating effect of the heating component 400 on the battery cell 20 from being affected due to the excessive width of the exhaust structure 410. Also, this can prevent the exhaust structure 410 from being easily adhered on both sides along the width direction X during attachment as a result of too small width of the exhaust structure 410, leading to poor exhaust effect of the exhaust structure 410, or can prevent the exhaust structure 410 from breakage because of discharging a large amount of gas in an instant as a result of too small width of the exhaust structure 410.

According to some embodiments of the present application, optionally, with further reference to Fig. 7, the distance d2 from the exhaust structure 410 to the edge of the heating component 400 along the height direction Y of the battery cell 20 is 4-6 mm.

When the distance d2 between the exhaust structure 410 and the edge of the heating component 400 along the height direction Y of the battery cell 20 is too small, it is easy to cause the heating component 400 to break or tear in this area, affecting the normal use of the heating component 400. In addition, when the area of the exhaust structure 410 is constant, the distance d2 between the exhaust structure 410 and the edge of the heating component 400 is kept within a certain range of values, which facilitates the exhaust structure 410 to be closer to the middle area, so as to shorten the gas discharge distance, and improve the exhaust effect of the exhaust structure 410.

Referring to Fig. 8, it is a perspective view of a heating component 400 provided by some embodiments of the present application.

According to some embodiments of the present application, optionally, as shown in Fig. 8, a heating wire 450 is disposed on the heating component 400, and the heating wire 450 is arranged on the outer periphery of the exhaust structure 410.

The heating wire 450 is also called an electric heating wire or a thermal wire, and becomes heated after being energized so as to heat the battery cells 20. The heating wires of the present application may be iron-chromium-aluminum heating wires or nickel-chromium heating wires, all of which have a certain heating effect, and the present application have no limitation on them. The heating component 400 can be a sandwich structure and the heating wire 450 is sandwiched between the interlayers, so as to avoid electric leakage as a result of exposure of the heating wire 450. Further, the heating wire 450 is arranged on the outer periphery of the exhaust structure 410, so that the heating wire 450 can be arranged away from the exhaust structure 410 to avoid local electric leakage caused by exposure of the heating wire 450 at the exhaust structure 410.

According to some embodiments of the present application, optionally, referring to Fig. 4, the battery 100 comprises a plurality of battery cells 20 stacked along the thickness direction of the battery cells 20, the heating component 400 comprises a plurality of exhaust structures 410, and each exhaust structure 410 is correspondingly attached to the surface of at least one side of each battery cell 20.

For the battery 100 formed by stacking a plurality of battery cells 20 along the thickness direction, in order to improve the assembly efficiency of the heating component 400 on the battery 100, the heating component 400 can be provided with a plurality of exhaust structures 410, and the heating component 400 can be attached on the integral whole composed of a plurality of battery cells 20, each exhaust structure 410 is arranged corresponding to each battery cell 20 to discharge the gas between the side surface of each battery cell 20 and the heating component 400, improving the overall performance of the battery 100.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various examples can be combined in any manner as long as there is no structural conflict. The present application is not limited to the specific embodiments disclosed herein, but rather comprises all technical solutions falling within the scope of the claims.

## Claims

1. A battery, comprising:
a battery cell;
a heating component attached to the surface of at least one side of the battery cell, and the heating component is used to heat the battery cell;
wherein, an exhaust structure is provided on the heating component at a position opposite to the side surface of the battery cell, and the exhaust structure is used to discharge the gas between the side surface of the battery cell and the heating component.

2. The battery according to claim 1, wherein the exhaust structure is arranged on the side surface of the battery cell in a middle area along the width direction of the battery cell.

3. The battery according to claim 2, wherein the exhaust structure comprises an exhaust vent extending through the heating component.

4. The battery according to claim 3, wherein a plurality of exhaust vents are arranged at intervals along the height direction of the battery cell.

5. The battery according to any one of claims 2-4, wherein the heating component is further provided with an anti-tear structure arranged at the end portion of the heating component along the height direction, and the anti-tear structure and the exhaust structure are arranged along the height direction at intervals.

6. The battery according to claim 5, wherein the anti-tear structure comprises an arc portion extending through the heating component.

7. The battery according to any one of claims 1-6, wherein the width of the exhaust structure is 2-6 mm along the width direction of the battery cell.

8. The battery according to any one of claims 1-7, wherein the distance from the exhaust structure to the edge of the heating component along the height direction of the battery cell is 4-6 mm.

9. The battery according to any one of claims 1-8, wherein a heating wire is further provided on the heating component, and the heating wire is arranged on the outer periphery of the exhaust structure.

10. The battery according to any one of claims 1-9, wherein the battery comprises a plurality of battery cells stacked along the width direction of the battery cell, the heating component comprises a plurality of exhaust structures, and each exhaust structure is correspondingly attached to the side surface of each battery cell.

11. An electrical apparatus, comprising a battery of any one of claims 1-10.
